# EUROPÄISCHE PATENTSCHRIFT

(11) **EP 4 069 494 B1**
(45) Veröffentlichungstag und Bekanntmachung des Hinweises auf die Patenterteilung: **02.04.2025**
(21) Anmeldenummer: 20807709.9
(22) Anmeldetag: 13.11.2020
(51) Int. Cl.: B29C 64/106, B29C 64/209, B29C 64/321, B33Y 10/00, B33Y 30/00

(54) **DRUCKEINRICHTUNG FÜR EINEN 3D-DRUCKER**
PRINTING DEVICE FOR A 3D PRINTER
DISPOSITIF D'IMPRESSION DESTINÉ À UNE IMPRIMANTE 3D

(30) Priorität: 06.12.2019 DE 102019219083
(43) Veröffentlichungstag der Anmeldung: 12.10.2022
(73) Patentinhaber: Robert Bosch GmbH, 70442 Stuttgart (DE)
(72) Erfinder: BARGEN, Hans, 70825 Korntal-Muenchingen (DE); ROMAN, Victor, 70567 Stuttgart (DE); JAHNLE, Hendrik, 71397 Leutenbach (DE)
(86) Internationale Anmeldenummer: PCT/EP2020/082006
(87) Internationale Veröffentlichungsnummer: WO 2021/110383

(56) Entgegenhaltungen:
- DE-A1- 102017 205 673
- US-A1- 2018 009 164

## Beschreibung

Die vorliegende Erfindung betrifft eine Druckeinrichtung für einen 3D-Drucker und ein Verfahren zum Betreiben einer solchen Druckeinrichtung.

### Stand der Technik

Ein 3D-Drucker für ein in seiner Viskosität veränderliches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in dem das Ausgangsmaterial druckfertig aufbereitet wird. Das Material wird dabei über Kanäle in dem Druckkopf weiterbefördert.

Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden. Um den Austrag des Materials auf der Arbeitsfläche zu beeinflussen ist in der Regel ein Aktor im Druckkopf vorgesehen, welcher eine Kraft auf eine Dosierzone aufbringt.

Aus der WO 2018/086792 A1 ist ein Druckkopf für einen 3D-Drucker bekannt. Der Druckkopf weist eine Zuführung auf, über welche ein zu druckendes Rohmaterial dem Druckkopf zugeführt wird. In dem Druckkopf wird dieses Rohmaterial aufgeschmolzen und plastifiziert. Dieses aufgeschmolzene Material wird innerhalb des Druckkopfes zu einer Austrittsöffnung befördert, über die dieses Material auf einen Druckbereich aufgebracht wird.

Die DE 10 2017 205 673 A1 offenbart eine Extrusionseinheit für eine Vorrichtung zur Extrusion von thermoplastischen Kunststoffen, wobei die Extrusionseinheit als separates, mit einer Dosiereinheit der Vorrichtung verbindbares Bauteil ausgebildet ist und ein Heißkanalsystem mit einem Einlass und einem Auslass umfasst, wobei der Einlass mit einem Auslass der Dosiereinheit verbindbar ist.

Aus der US 2018/009164 A1 ist eine dreidimensionale Laminier- und Formgebungsvorrichtung bekannt, wobei diese zum Formen eines dreidimensionalen laminierten und geformten Objekts durch Ausbreiten eines Materials des dreidimensional laminierten und geformten Objekts auf einer Formgebungsfläche, Schmelzen und Verfestigen des Materials durch Bestrahlen des verteilten Materials mit einem Elektronenstrahl ausgebildet ist.

### Offenbarung der Erfindung

Im Rahmen der Erfindung wurde eine Druckeinrichtung für einen 3D-Drucker entwickelt. Diese Druckeinrichtung umfasst eine Dosiereinheit zum Schmelzen und Plastifizieren eines zu druckendenden Materials und eine Austragungseinheit, zum Drucken des über die Dosiereinheit bereitgestellten Materials.

Als Dosiereinheit im Sinne der Erfindung wird insbesondere ein Bereich verstanden, dem ein Rohmaterial zugeführt wird, wobei dieses Rohmaterial in der Dosiereinheit aufgeschmolzen und plastifiziert wird. Weiterhin kann das aufgeschmolzene Material auch dosiert bereitgestellt werden. Die Austragungseinheit ist dabei ein Bereich, über welchen das Material zum Herstellen eines 3D-Körpers abgebbar ist.

Die Dosiereinheit und die Austragungseinheit sind getrennt voneinander angeordnet und miteinander verbindbar, wobei die Austragungseinheit zur Aufnahme von Material zu der Dosiereinheit transportierbar und zum Verbinden der Austragungseinheit mit der Dosiereinheit eine Düse der Austragungseinheit und eine Koppelstelle der Dosiereinheit miteinander zur Anlage kommen.

Die Dosiereinheit und die Austragungseinheit werden somit voneinander getrennt. Beide Einheiten können jedoch zur Aufnahme von Material miteinander verbunden werden. Dementsprechend weist die Austragungseinheit ein Volumen auf, in dem eine gewisse Menge des aufgeschmolzenen Materials aufgenommen werden kann.

Es wurde erkannt, dass dadurch gegenüber Druckköpfen, bei welchen die Dosiereinheit und die Austragungseinheit zusammen in dem Druckkopf vorgesehen sind, Vorteile erzielt werden. Insbesondere wird durch die Trennung der beiden Einheiten ein geringeres Gewicht bewegt, welches im Wesentlichen die Austragungseinheit mit dem aufgeschmolzenen Material umfasst. Dementsprechend wird die Dynamik eines solchen 3D-Druckers verbessert.

Durch die Trennung der verschiedenen Funktionen kann die entsprechende Einheit optimaler hinsichtlich der Funktion gestaltet werden. Beispielsweise hat ein Aktor, der eine Kraft auf das Material in der Dosiereinheit ausübt keinen Einfluss mehr auf die Austragsmenge in der Austragungseinheit. Dadurch können die beispielsweise Aktoren kostengünstiger und effektiver hinsichtlich dem zu erreichenden Ergebnis ausgelegt werden.

Die Trennung der Dosiereinheit von des Austragungseinheit hat zusätzlich den Vorteil, dass die Materialausnutzung verbessert wird. Bei einem Druckkopf mit Dosiereinheit und Austragungseinheit muss das eingeführte Material verbraucht werden, um ein späteres Erstarren des aufgeschmolzenen Material in der Austragungseinheit zu vermeiden. Dadurch wird vielfach nicht alles Material genutzt, so dass Abfall entsteht. Im Gegensatz dazu kann von der Dosiereinheit lediglich die Menge in die Austragungseinheit eingefüllt werden, die benötigt wird. Dadurch wird somit die Materialausnutzung maximiert und die Kosten reduziert, so dass mit einer solchen Druckeinrichtung eine wirtschaftlichere Fertigung möglich ist.

Um die Wirtschaftlichkeit zusätzlich zu erhöhen sind in einer bevorzugten Ausführung der Erfindung mehrere Austragungseinheiten vorgesehen, die abwechselnd zur Aufnahme von Material mit einer einzigen Dosiereinheit zusammenwirken. Dies bedeutet, dass für mehrere Austragungseinheiten lediglich eine Dosiereinheit notwendig ist. Es wird somit für jede Austragungseinheit keine separate Dosiereinheit gebraucht. Dadurch wird die Auslastung der Dosiereinheit erhöht, so dass die Wirtschaftlichkeit einer solchen Anlage steigt.

In einer beispielsweise Industrieanlage sind in einer weiteren bevorzugten Ausführung der Erfindung die Austragungseinheiten verschiedenen voneinander getrennten Druckkammereinheiten zugeordnet. Es können somit die Austragungseinheiten von mehreren Druckprozessen, die jeweils ein verschiedenes Werkstück herstellen mit lediglich einer Dosiereinheit zusammenarbeiten.

Zum Transportieren der Austragungseinheit zu der Dosiereinheit ist dabei vorzugsweise ein separates Transportiersystem vorgesehen. Das Transportiersystem ist dabei ein System, welches die Austragungseinheit von einen Bereich, wo ein Werkstück gedruckt wird, zu der Dosiereinheit bringt. Dies kann beispielsweise über ein Schienensystem erfolgen, entlang welchem die Austragungseinheit transportiert wird. In einer Ausführung kann dabei eine Druckachse derart verlängert sein, dass diese bis zu der Dosiereinheit reicht. Dies ist insbesondere bei kleineren System vorteilhaft.

In einem weiteren Ausführungsbeispiel kann die Austragungseinheit auch über einen Roboter zu der Dosiereinheit gebracht werden. In gleicher Weise kann die Austragungseinheit von der Dosiereinheit zurück zu dem Werkstück transportiert werden. Ein solches Transportiersystem ist insbesondere bei größeren System von Vorteil.

Das Transportiersystem hat dabei den Vorteil, dass die Austragungseinheiten einfach gehalten werden können und speziell hinsichtlich der Funktion des Austragens spezialisiert werden können. Dadurch werden die Kosten für die Austragungseinheiten reduziert. Vorzugsweise transportiert das Transportiersystem dabei mehrere Austragungseinheiten, so dass die Auslastung des Transportiersystems verbessert wird. Die Kosten für ein solches Transportiersystem können dementsprechend gesenkt werden.

In einer vorteilhaften Weiterbildung weist das Transportiersystem einen beheizbaren Transportträger auf, in der die Austragungseinheit aufgenommen ist. Der Transportträger ist dabei ein Teil des Transportiersystem, über welchen die Austragungseinheit direkt gehalten wird. Die Austragungseinheit wird dabei wenigstens teilweise außenseitig von dem beheizbaren Teil des Transportträgers umgeben. Durch eine Beheizung des Transportträgers ist es möglich eine Abkühlung des aufgeschmolzenen Material in der Austragungseinheit während des Transportes zu minimieren. Dementsprechend wird die Lagerzeit des Materials in der Austragungseinheit verlängert.

Die Austragungseinheit ist vorteilhafterweise in der Druckeinrichtung wechselbar angeordnet. Mit anderen Worte kann die Austragungseinheit die im Einsatz ist, gegen eine andere Austragungseinheit ausgewechselt werden. Dies hat den Vorteil, dass für den Druck eine Austragungseinheit mit einer unterschiedlichen Düsenöffnung, Querschnitt oder Volumen verwendet werden kann. Auch kann die Farbe einer Austragungseinheit getauscht werden. Dadurch kann die Austragungseinheit optimaler an die notwendige Fertigung des Werkstückes angepasst werden, so dass eine Fertigung des Werkstückes verbessert ist. Ein Wechsel der Austragungseinheit ist vorteilhafterweise während des Betriebs möglich. Dadurch ist keine Unterbrechung der Fertigung notwendig, so dass die Fertigung schneller und wirtschaftlicher durchführbar ist. Die Austragungseinheit wird dabei bevorzugt automatisiert gewechselt, so dass Personalkosten reduziert werden können.

Erfindungsgemäß weist die Austragungseinheit einen Austragungskolben auf, der mit einem Mittel zusammenwirkt, mit welchem bei der Aufnahme von Material eine Kraft entgegen einer Befüllungsrichtung der Austragungseinheit aufbringbar ist. Während der Befüllung der Austragungseinheit an der Dosiereinheit wird somit entgegen das aufzunehmende Material eine Kraft ausgeübt. Der Austragungskolben ist dabei ein Kolben, welcher in der Austragungseinheit beweglich ist und auf das in der Austragungseinheit aufgenommene Material wirkt. In einer bevorzugten Ausführung ist das Mittel eine Feder. Die Kraft hat dabei den Vorteil, dass das Mittel eine Rückbewegung des Austragungskolbens bremst. Dadurch kann eine luftfreie Füllung der Austragungseinheit sichergestellt werden.

In einer zweckmäßigen Ausführung ist ein Austragungskolben vorgesehen, welcher von einem Servomotor angetrieben ist, so dass das Material zum Drucken ausförderbar ist. Ein Servomotor hat den Vorteil, dass damit die Genauigkeit und die Reproduzierbarkeit der Ausförderung des Materials aus der Austragungseinheit erhöht wird. Dadurch wird die Qualität des Werkstückes wesentlich verbessert.

Im Gegensatz zu einem aus dem Stand der Technik bekannten Druckkopf wirkt der Servomotor der Austragungseinheit lediglich auf eine homogene Schmelze. Dadurch ist eine geringe Leistung für einen solchen Servomotor notwendig, so dass eine Realisierbarkeit eines solchen Servomotors aufgrund gesunkener Kosten möglich ist.

Um die hohen Kräfte in der Dosiereinheit zu gewährleisten, weist die Dosiereinheit vorzugsweise einen Dosierkolben zum Ausfördern des Materials in der Dosiereinheit auf, welcher über eine Hydraulik oder einen Elektromotor angetrieben ist. Der Dosierkolben ist dabei ebenso in der Dosiereinheit bewegbar angeordnet und übt eine Kraft auf das Material in der Dosiereinheit aus, um dieses Material aus der Dosiereinheit in die Austragungseinheit zu befördern. Im Gegensatz zu der Austragungseinheit, wo eine hohe Genauigkeit notwendig ist, können bei der Dosiereinheit somit ausreichende Kräfte bereitgestellt werden. Durch die Trennung der Austragungseinheit von der Dosiereinheit kann somit jede Einheit hinsichtlich der Funktion optimiert werden.

Die Erfindung gibt zusätzlich ein Verfahren zum Betreiben einer solchen Druckeinrichtung an. Das Verfahren umfasst dabei die Schritte des Transportierens der Austragungseinheit zu der Dosiereinheit, des Verbindens der Austragungseinheit mit der Dosiereinheit, des Befüllens der Austragungseinheit mit zu druckendem Material, und des Transportierens der Austragungseinheit zu einem zu druckenden Bereich. Beim Verbinden der Dosiereinheit mit der Austragungseinheit sind beide Einheiten derart dichtend miteinander verbunden, so dass das Material von der Dosiereinheit zu der Austragungseinheit übertragbar ist. Mit einem solchen Verfahren können die zuvor genannten Vorteile erzielt werden.

Ausführungsbeispiele der Erfindung sind in der Zeichnung dargestellt und in der nachfolgenden Beschreibung näher erläutert. Es zeigt:
- Figur 1: Ausführungsbeispiel einer Druckeinrichtung während einer Befüllung einer Austragungseinheit,
- Figur 2: Ausführungsbeispiel einer Druckeinrichtung während eines Transportes der Austragungseinheit,
- Figur 3: Ausführungsbeispiel einer Druckeinrichtung mit mehreren Austragungseinheiten, welche in verschiedenen Druckkammereinheiten angeordnet sind, und
- Figur 4: Verfahren zum Betreiben der Druckeinrichtung.

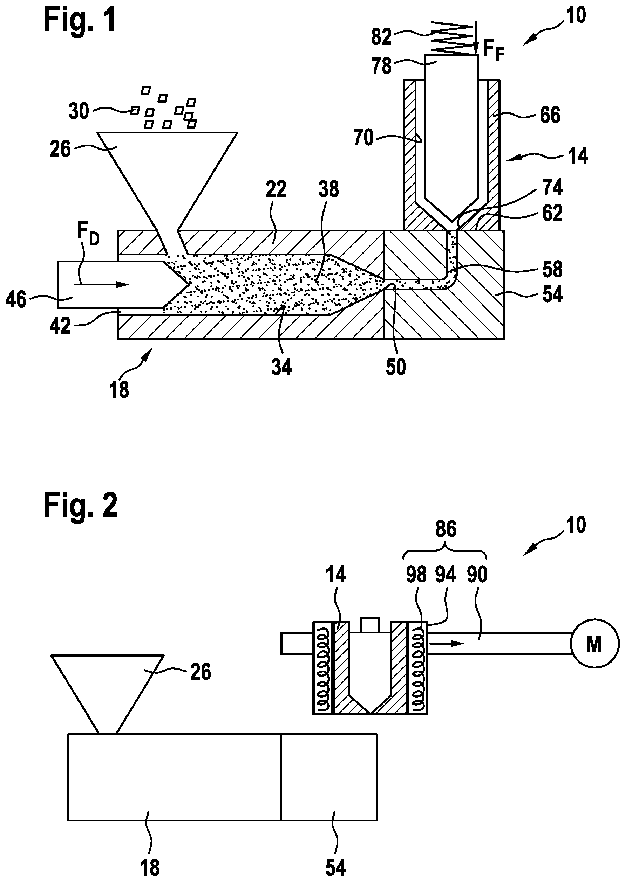

In Figur 1 ist ein Ausführungsbeispiel einer Druckeinrichtung 10 während einer Befüllung einer Austragungseinheit 14, gezeigt. Die Figur 1 ist dabei in einer Schnittansicht gezeigt. Die Druckeinrichtung 10 weist zusätzlich zu der Austragungseinheit 14 eine Dosiereinheit 18 auf. Die Dosiereinheit 18 ist dabei gebildet aus einem Grundkörper 22 an welchem ein Einfülltrichter 26 angeordnet ist. In den Einfülltrichter 26 ist ein Rohmaterial 30 einfüllbar, welches in fester Form vorliegt. Der Einfülltrichter 26 ist direkt verbunden mit einem durch den Grundkörper 22 gebildeten Dosierraum 34. In diesem Dosierraum 34 wird das Rohmaterial 30, zur Bildung eines druckfähigen Materials 38, aufgeschmolzen und plastifiziert.

Der Dosierraum 34 weist eine seitliche Dosierkolbenöffnung 42 auf. In dieser Dosierkolbenöffnung 42 ist ein Dosierkolben 46 angeordnet, welcher in den Dosierraum 34 hineinragt. Über den Dosierkolben 46 kann eine Dosierkolbenkraft F_{D} auf das Material 38 in dem Dosierraum 34 aufgebracht werden, so dass dieses in Richtung einer der Dosierkolbenöffnung 42 gegenüber liegenden Dosierförderöffnung 50 pressbar ist.

An der Dosierförderöffnung 50 weist die Dosiereinheit 18 ein Koppelelement 54 auf, welches einen Kanal 58 ausbildet, so dass das über die Dosierförderöffnung 50 ausgebrachte Material 38 an eine Koppelstelle 62 des Koppelementes 54 förderbar ist. An der Koppelstelle 62 ist die Austragungseinheit 14 angeordnet, so dass diese Austragungseinheit 14 das aufgeschmolzene Material 38 aufnehmen kann.

Die Austragungseinheit 14 weist einen Austragungskörper 66 auf, welcher einen Austragungsraum 70 ausbildet, in welchem aufgeschmolzenes Material 38 aufnehmbar ist. An einem mit der Koppelstelle 62 verbundenen Ende des Austragungskörpers 66 ist eine Düse 74 ausgebildet, über die das aufgeschmolzene Material 38 aufgenommen werden kann. Ebenso wird das Material 38 durch diese Düse 74 auf ein Werkstück (nicht gezeigt) aufgebracht.

Innerhalb des Austragungsraums 70 ist ein Austragungskolben 78 angeordnet, über den das Material 38 ausgefördert werden kann. Oberhalb des Austragungskolben 78 ist ein Mittel 82 angeordnet, über welches während der Befüllung eine Kraft F_{F} entgegen einer Befüllungsrichtung aufgebracht wird. In diesem Ausführungsbeispiel ist das Mittel 82 als eine schematisch angedeutete Feder ausgeführt. Durch die auf den Austragungskolben 78 ausgeübte Kraft F_{F} wird eine Befüllung der Austragungseinheit 14 ohne Luft gewährleistet. Während des Befüllens wird der Austragungskolben 78 dabei in Richtung der Feder 82 verschoben.

In Figur 2 ist ein Ausführungsbeispiel der Druckeinrichtung 10 während eines Transportes der Austragungseinheit 14 gezeigt. In dieser Figur ist insbesondere ein Transportiersystem 86 der Druckeinrichtung 10 gezeigt. In diesem Ausführungsbeispiel ist das Transportiersystem 86 aus einer Achseinheit 90 gebildet, welches hier schematisch angedeutet mit einem Motor M verbunden ist. Über dieses Transportiersystem 86 ist die Austragungseinheit 14 zwischen der Dosiereinheit 18 und einem zu fertigenden Werkstück (nicht gezeigt) transportierbar. Der Transport kann dabei automatisch durchgeführt werden.

In diesem Ausführungsbeispiel weist das Transportiersystem 86 zusätzlich einen Transportträger 94 auf, welche die Austragungseinheit 14 außenseitig umgibt. Der Transportträger 94 weist hier insbesondere eine Heizung 98 auf, über die das Material in der Austragungseinheit 14 während des Transportes beheizbar ist. Dadurch kann die Lagerzeit des Materials in der Austragungseinheit 14 verlängert werden, so dass beispielsweise auch längere Transportwege oder Transportzeiten möglich sind. In einem hier nicht gezeigten Ausführungsbeispiel kann das Transportiersystem 86 auch über einen Roboter realisiert werden.

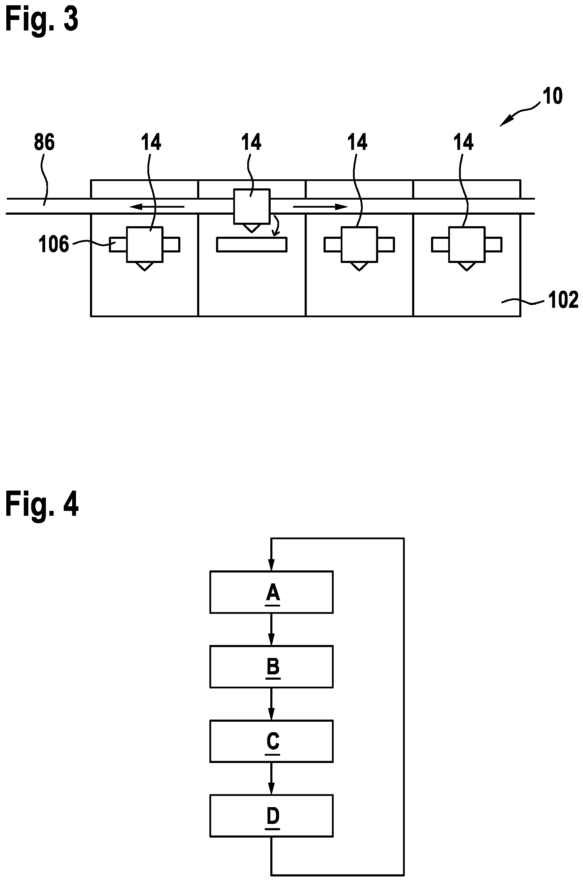

Figur 3 zeigt ein Ausführungsbeispiel der Druckeinrichtung 10 mit mehreren Austragungseinheiten 14, welche in verschiedenen Druckkammereinheiten 102 angeordnet sind. Jede Druckkammereinheit 102 fertigt dabei ein anderes Werkstück. In jeder Druckkammereinheit 102 ist eine Austragungseinheit 14 angeordnet, welche jeweils von einem Druckkopfkörper 106 aufgenommen ist, über den die Austragungseinheit 14 bewegbar ist. Der Druckkopfkörper 106 kann ebenfalls wie der Transportträger 94 mit einer Heizung (nicht gezeigt) ausgebildet sein.

Die Druckkammereinheiten 102 sind insbesondere über ein einziges Transportiersystem 86 mit einer Dosiereinheit 18 verbunden. Dementsprechend können mehrere Austragungseinheiten 14 über ein einziges Transportiersystem 86 mit einer einzigen Dosiereinheit 18 verbunden werden. Dadurch wird die Auslastung der Komponenten verbessert.

In Figur 4 ist ein Verfahren zum Betreiben der Druckeinrichtung 10 gezeigt. In einem ersten Schritt A wird die Austragungseinheit 14 zur der Dosiereinheit 18 transportiert. In einem zweiten Schritt B wird die Austragungseinheit 14 mit der Dosiereinheit 18 gekoppelt. Dabei wird eine dichtende Verbindung zwischen der Dosiereinheit 18 und der Austragungseinheit 14 gebildet. In einem daran anschließenden Schritt C wird die Austragungseinheit 14 von der Dosiereinheit 18 befüllt. Dabei kann die Austragungseinheit 14 vollständig gefüllt werden. Ebenso kann die Austragungseinheit 14 lediglich mit einer bestimmten Menge an Material befüllt werden. Diese Menge ist dabei derart bemessen, dass eine vollständige Materialausnutzung gewährleistet wird. In einem abschließenden Schritt D wird die derart gefüllte Austragungseinheit 14 zu einem Druckbereich transportiert. Dieses Verfahren kann sich während des Druckes mehrfach wiederholen.

## Patentansprüche

1. Druckeinrichtung (10) für einen 3D-Drucker umfassend eine Dosiereinheit (18) zum Schmelzen und Plastifizieren eines zu druckenden Materials (38) und eine Austragungseinheit (14), zum Drucken des über die Dosiereinheit (18) bereitgestellten Materials (38), wobei
die Dosiereinheit (18) und die Austragungseinheit (14) getrennt voneinander angeordnet und miteinander verbindbar sind, wobei die Austragungseinheit (14) zur Aufnahme von Material (38) zu der Dosiereinheit (18) transportierbar und zum Verbinden der Austragungseinheit (14) mit der Dosiereinheit (18) eine Düse (74) der Austragungseinheit (14) und eine Koppelstelle (62) der Dosiereinheit (18) miteinander zur Anlage kommen,
**dadurch gekennzeichnet, dass**
die Austragungseinheit (14) einen Austragungskolben (78) aufweist, der mit einem Mittel (82) zusammenwirkt, mit welchem bei der Aufnahme von Material (38) eine Kraft (F_{F}) entgegen einer Befüllungsrichtung der Austragungseinheit (14) aufbringbar ist.

2. Druckeinrichtung (10) nach Anspruch 1, **dadurch gekennzeichnet, dass** mehrere Austragungseinheiten (14) vorgesehen sind, die abwechselnd zur Aufnahme von Material (38) mit einer einzigen Dosiereinheit (18) zusammenwirken.

3. Druckeinrichtung (10) nach Anspruch 2, **dadurch gekennzeichnet, dass** die Austragungseinheiten (14) verschiedenen voneinander getrennten Druckkammereinheiten (102) zugeordnet sind.

4. Druckeinrichtung (10) nach einem der vorherigen Ansprüche, **dadurch gekennzeichnet, dass** zum Transportieren der Austragungseinheit (14) zu der Dosiereinheit (18) ein separates Transportiersystem (86) vorgesehen ist.

5. Druckeinrichtung (10) nach Anspruch 4, **dadurch gekennzeichnet, dass** das Transportiersystem (86) einen beheizbaren Transportträger (94) aufweist, in der die Austragungseinheit (14) aufgenommen ist.

6. Druckeinrichtung (10) nach einem der vorherigen Ansprüche, **dadurch gekennzeichnet, dass** die Austragungseinheit (14) in der Druckeinrichtung (10) wechselbar angeordnet ist.

7. Druckeinrichtung (10) nach einem der vorherigen Ansprüche, **dadurch gekennzeichnet, dass** die Austragungseinheit (14) einen Austragungskolben (78) aufweist, welcher von einem Servomotor angetrieben ist, so dass das Material (38) zum Drucken ausförderbar ist.

8. Druckeinrichtung (10) nach einem der vorherigen Ansprüche, **dadurch gekennzeichnet, dass** die Dosiereinheit (18) einen Dosierkolben (46) zum Ausfördern des Materials (38) in der Dosiereinheit (18) aufweist, welcher über eine Hydraulik oder einen Elektromotor angetrieben ist.

9. Verfahren zum Betreiben einer Druckeinrichtung (10) nach einem der vorherigen Ansprüche, wobei das Verfahren die Schritte umfasst:
- Transportieren (A) der Austragungseinheit (14) zu der Dosiereinheit (18),
- Verbinden (B) der Austragungseinheit (14) mit der Dosiereinheit (18),
- Befüllen (C) der Austragungseinheit (14) mit zu druckendem Material (38), und
- Transportieren (D) der Austragungseinheit (14) zu einem zu druckenden Bereich.

## Claims

1. Printing device (10) for a 3D printer, comprising a metering unit (18) for melting and plasticizing a material (38) to be printed, and a discharge unit (14) for printing the material (38) supplied via the metering unit (18), wherein
the metering unit (18) and the discharge unit (14) are separate from one another and can be connected to each other, wherein the discharge unit (14) can be transported to the metering unit (18) in order to receive material (38) and a nozzle (74) of the discharge unit (14) and a coupling point (62) of the metering unit (18) come into contact with each other in order to connect the discharge unit (14) to the metering unit (18),
**characterized in that**
the discharge unit (14) has a discharge piston (78) that interacts with a means (82), with which a force (F_{F}) can be applied, counter to a filling direction of the discharge unit (14), while material (38) is being received.

2. Printing device (10) according to Claim 1, **characterized in that** multiple discharge units (14) are provided and interact in turn with a single metering unit (18) in order to receive material (38).

3. Printing device (10) according to Claim 2, **characterized in that** the discharge units (14) are assigned to different, mutually separate printing chamber units (102).

4. Printing device (10) according to one of the preceding claims, **characterized in that** a separate transporting system (86) is provided for transporting the discharge unit (14) to the metering unit (18).

5. Printing device (10) according to Claim 4, **characterized in that** the transporting system (86) has a heatable transport support (94) which contains the discharge unit (14).

6. Printing device (10) according to one of the preceding claims, **characterized in that** the discharge unit (14) is arranged replaceably in the printing device (10).

7. Printing device (10) according to one of the preceding claims, **characterized in that** the discharge unit (14) has a discharge piston (78) which is driven by a servomotor such that the material (38) can be dispensed for printing.

8. Printing device (10) according to one of the preceding claims, **characterized in that** the metering unit (18) has a metering piston (46) which is intended for dispensing the material (38) in the metering unit (18) and which is driven via a hydraulic system or an electric motor.

9. Method for operating a printing device (10) according to one of the preceding claims, wherein the method comprises the steps of:
- transporting (A) the discharge unit (14) to the metering unit (18),
- connecting (B) the discharge unit (14) to the metering unit (18),
- filling (C) the discharge unit (14) with material (38) to be printed, and
- transporting (D) the discharge unit (14) to an area to be printed.

## Revendications

1. Dispositif d'impression (10) pour une imprimante 3D comprenant une unité de dosage (18) pour faire fondre et plastifier un matériau à imprimer (38) et une unité de distribution (14) pour imprimer le matériau (38) fourni par l'unité de dosage (18), dans lequel
l'unité de dosage (18) et l'unité de distribution (14) sont agencées séparément l'une de l'autre et sont aptes à être reliées l'une à l'autre, l'unité de distribution (14) étant apte à être transportée vers l'unité de dosage (18) pour recevoir le matériau (38) et une buse (74) de l'unité de distribution (14) et un point de liaison (62) de l'unité de dosage (18) venant en appui l'un contre l'autre pour relier l'unité de distribution (14) à l'unité de dosage (18),
**caractérisé en ce que**
l'unité de distribution (14) présente un piston de distribution (78) qui coopère avec un moyen (82) permettant d'appliquer une force (F_{F}) dans le sens opposé au sens de remplissage de l'unité de distribution (14) lors de la réception de matériau (38).

2. Dispositif d'impression (10) selon la revendication 1, **caractérisé en ce qu'**il est prévu plusieurs unités de distribution (14) qui coopèrent en alternance avec une seule unité de dosage (18) pour recevoir le matériau (38).

3. Dispositif d'impression (10) selon la revendication 2, **caractérisé en ce que** les unités de distribution (14) sont associées à différentes unités (102) formant chambres d'impression séparées les unes des autres.

4. Dispositif d'impression (10) selon l'une des revendications précédentes, **caractérisé en ce qu'**un système de transport séparé (86) est prévu pour transporter l'unité de distribution (14) vers l'unité de dosage (18).

5. Dispositif d'impression (10) selon la revendication 4, **caractérisé en ce que** le système de transport (86) comporte un support de transport (94) apte à être chauffé, dans lequel est logée l'unité de distribution (14).

6. Dispositif d'impression (10) selon l'une des revendications précédentes, **caractérisé en ce que** l'unité de distribution (14) est agencée de manière amovible dans le dispositif d'impression (10).

7. Dispositif d'impression (10) selon l'une des revendications précédentes, **caractérisé en ce que** l'unité de distribution (14) comprend un piston de distribution (78) qui est entraîné par un servomoteur, de sorte que le matériau (38) est apte à être évacué pour l'impression.

8. Dispositif d'impression (10) selon l'une des revendications précédentes, **caractérisé en ce que** l'unité de dosage (18) comprend un piston de dosage (46) pour l'évacuation du matériau (38) dans l'unité de dosage (18), lequel est entraîné par un système hydraulique ou un moteur électrique.

9. Procédé pour faire fonctionner un dispositif d'impression (10) selon l'une des revendications précédentes, le procédé comprenant les étapes consistant à :
- transporter (A) l'unité de distribution (14) vers l'unité de dosage (18),
- relier (B) l'unité de distribution (14) à l'unité de dosage (18),
- remplir (C) l'unité de distribution (14) avec le matériau à imprimer (38), et
- transporter (D) l'unité de distribution (14) vers une zone à imprimer.
